Europäisches Patentamt

European Patent Office

Office européen des brevets

(11) Publication number: **0 101 269**
**B1**

## (12) EUROPEAN PATENT SPECIFICATION

(45) Date of publication of patent specification: **07.01.87**

(51) Int. Cl.⁴: **B 29 C 41/04**

(21) Application number: **83304538.8**

(22) Date of filing: **05.08.83**

(54) Manufacture of flagpoles and the like.

(30) Priority: **17.08.82 GB 8223642**

(43) Date of publication of application:
**22.02.84 Bulletin 84/08**

(45) Publication of the grant of the patent:
**07.01.87 Bulletin 87/02**

(84) Designated Contracting States:
**DE FR GB IT**

(56) References cited:
**DE-A-2 018 814**
**DE-A-2 437 805**
**DE-B-1 215 900**

(73) Proprietor: **GLASDON LIMITED**
**Export Centre Preston New Road**
**Blackpool Lancashire, FY4 4UR (GB)**

(72) Inventor: **Cheshire, Edward John**
**Langtons Farmhouse Sun Lane**
**New Alresford Hampshire (GB)**

(74) Representative: **Lerwill, John et al**
**A.A. Thornton & Co. Northumberland House**
**303-306 High Holborn**
**London, WC1V 7LE (GB)**

## Description

This invention relates to the manufacture of elongate tubular elements from synthetic materials and has particular reference to relatively narrow elements, such as flagpoles and aerial masts.

It is known to manufacture hollow poles of comparatively large diameter, e.g. telegraph poles and lamp posts, from fibre reinforced plastics (FRP) material. The method employed in making such poles involves the use of a rotating mould, the fibre reinforcement being introduced to line the inside surface of the mould, after which the plastics resin is sprayed onto the inside of the rotating mould by means of a nozzle which is mounted at the free end of a cantilevered boom and withdrawn from the mould at a controlled rate to obtain the desired thickness of resin along the length of the mould. The boom supports the spray nozzle and its supply hose clear of the mould wall so that there is no risk of the boom, hose or nozzle coming into contact with and snagging the loose reinforcement material causing it to become pulled away from the inner surface of the mould. Although this known method is satisfactory for the production of relatively large diameter poles, it is not entirely suitable for making poles of relatively small diameter as commonly used for flags and aerials. In a mould of small diameter there is very little space to accommodate the boom and the boom being several metres long bends naturally under its own weight as well as that of the resin-filled hose, with the result that the boom can not be inserted fully into a narrow mould without touching the side surface, which is totally unacceptable since it will the contact and lift the fibre reinforcement material away from the wall of the mould. It is also known to pour plastics material directly into the mould from one end, but this method is too slow for FRP material.

An apparatus for manufacturing FRP tubes and in which resin is introduced into the mould through a nozzle carried by a cantilever beam as described above, is disclosed in GB—A—1307404 (DE—A—2 018 814).

The present invention seeks to provide a solution to the problem mentioned above and thereby enable the manufacture of smaller diameter poles. According to the invention there is provided a method of manufacturing elongate tubular members of fibre reinforced plastics material comprising the steps of lining the interior surface of a generally horizontal elongate hollow mould with reinforcing fibre material, introducing into the mould a hose having a nozzle at the free end thereof, rotating the mould, and supplying liquid resin to the hose and spraying the resin through the nozzle onto the inside of the rotating mould while withdrawing the hose and nozzle along the mould, characterised in that the nozzle and a length of hose attached thereto are substantially without external support within the mould and rest against the lined wall of the mould, the nozzle and said length of hose sliding freely over the dry reinforcement material as the mould rotates and the nozzle is withdrawn along the mould.

It has been found surprisingly that this technique can be used without an attendant risk of the hose and nozzle snagging and destroying the lining of reinforcement fibres.

The invention also provides an apparatus for manufacturing elongate tubular members by the method of claim 1, comprising a generally horizontal elongate hollow mould, means for rotating the mould about the axis thereof, means for lining the inside surface of the mould with reinforcing fibre material, a nozzle for spraying liquid resin onto the inside of the lined mould, a hose for supplying liquid resin to the nozzle and means for withdrawing the hose and nozzle through the mould, characterised in that the nozzle and a length of hose attached thereto are substantially without external support means within the mould and are adapted to rest against the lined wall of the mould to slide freely relative thereto as the nozzle is withdrawn along the mould.

The nozzles is preferably supported by a member having a low coefficient of friction with the reinforcement material, e.g. a sleeve of p.t.f.e. having the outer shape of an elongated barrel. The hose should also be made of low-friction material, such as nylon, and have a very smooth outer surface. The hose may also be contained within a hollow sleeve of low friction material.

The speed at which the mould is rotated during injection of the resin should be high enough to generate a centrifugal acceleration greater than 1 G and typical values may be 2—5 G. After the hose and nozzle have been removed the rotational speed is substantially increased.

A full understanding of the invention will be had from the following detailed description given in conjunction with the accompanying drawings, in which:—

Figure 1 is an axial section through an apparatus for moulding a pole by the method of the invention:

Figure 2 is a detail view showing part of the mould in Figure 1;

Figure 3 is a transverse section through the apparatus of Figure 1 on an enlarged scale; and

Figure 4 is a view similar to Figure 2 showing a modified nozzle and support arrangement.

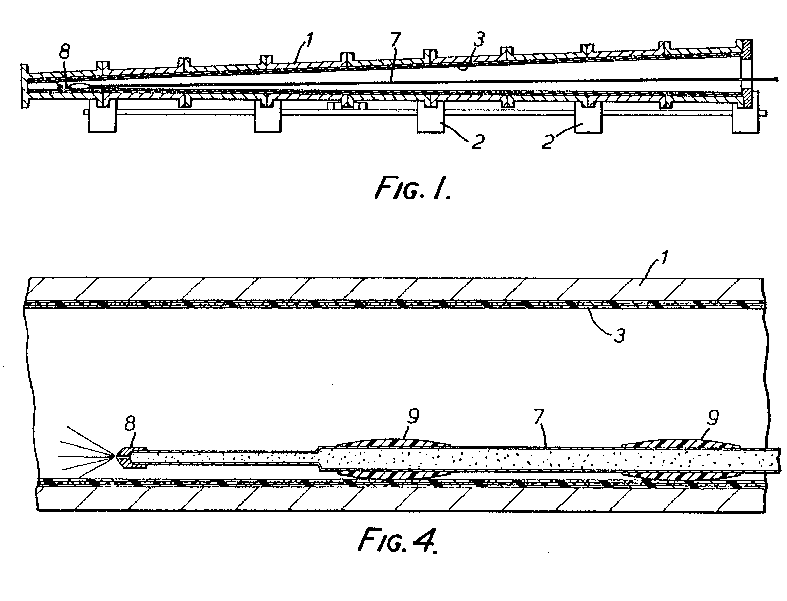

The apparatus illustrated in Figures 1—3 comprises an elongate conical mould 1 supported for rotation about its axis by rollers 2. In a manner known in the art the mould is mounted with its axis inclined at a small angle to the horizontal to achieve an even distribution of resin material on the interior when the mould is rotated. A layer 3 of glass fibre mat material or other reinforcement is shown lining the mould 2. To introduce the reinforcement layer 3, a sheet of woven glass fibres is wound upon a mandrel (not shown), but a cord is first laid along the length of the mandrel for reasons which are explained below. The mandrel carrying the reinforcing material is inserted into the open end of the mould, and the mandrel is then withdrawn to leave the layer 3 of reinforcing material lining the mould cavity and the cord extending through the mould on the inside of the lining layer. it should be noted that the fibre sheet is wound on the mandrel in such a direction that when the material is transferred onto the inner surface of the mould 1 the free inner edge forms a trailing edge 5 when the mould is driven in its predetermined direction of rotation as indicated by the arrow 6 in Figure 3.

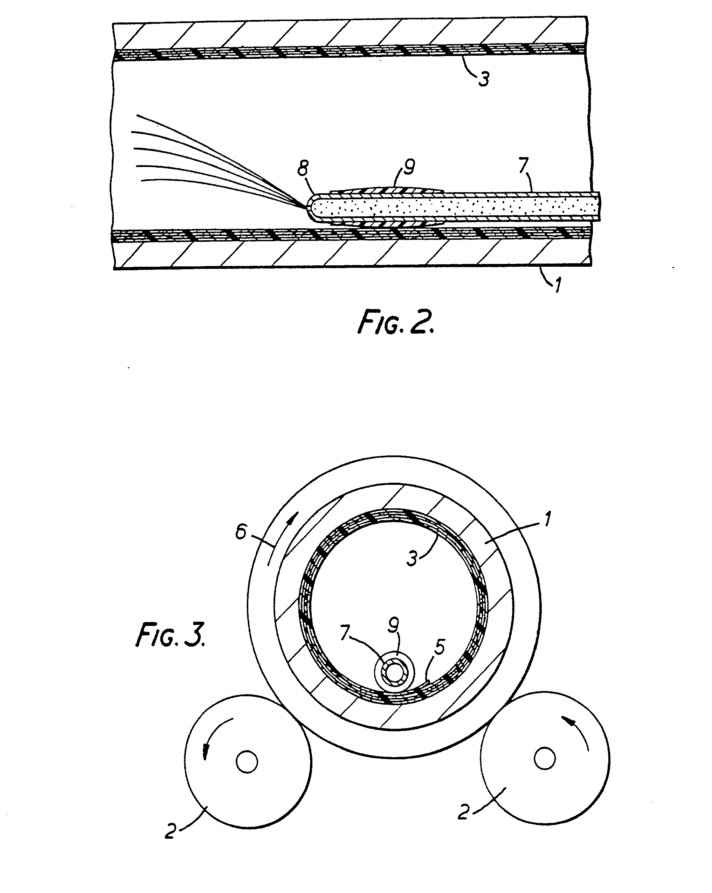

The cord which passes along the mould is used to pull into the mould a resin supply system consisting of a flexible or semi-rigid hose 7 carrying a spray nozzle 8. The hose has a very smooth outer surface and is conveniently made of nylon. The end of the cord protruding at the larger end of the mould 3 is attached to the nozzle 8 and by pulling on the opposite end of the cord the nozzle is pulled into and along the mould until it is located adjacent the narrow end. To assist the sliding movement of the nozzle over the layer of reinforcing material it is supported by a sledge member which may be seen in Figure 2 to consist of a sleeve 9 having an elongated barrel-shape. The sleeve is made of material having a low coefficient of friction, such as p.t.f.e.

The cord is detached from the nozzle and the mould 3 is set in rotation at a relatively low speed to produce a centrifugal acceleration greater than 1 G and preferably 2—5 G. For example, in the manufacture of a pole of 50 mm diameter a speed of about 260 r.p.m. will be satisfactory. The hose 7 and nozzle 8 slide over the inner surface of the reinforcing material and remain in the lowermost part of the mould while it is rotating at this speed. Liquid resin is supplied to the nozzle 8 through the hose 7 and is sprayed onto the interior of the mould at a short distance in front of the nozzle 8 to coat and penetrate between the fibres of the reinforcing layer. By pulling on the hose 7 the nozzle 8 is withdrawn along the mould sliding as it does so over the dry reinforcing material not yet coated with resin. The thickness of resin applied is determined by suitably controlling the resin flow rate and the rate at which the nozzle 8 is displaced along the mould. Over the final stage of nozzle withdrawal adjacent the larger end of the mould, the hose is blown through with air in known manner to drive out the remaining resin and thereby leave the hose and nozzle clean ready to be used again.

When the nozzle has been removed from the mould the speed of rotation is increased substantially, e.g. to a value sufficient to produce a centrifugal acceleration greater than 40 G. For the example of a 50 mm pole mentioned above the speed may be increased to approximately 1200 r.p.m. for a short period and then reduced to about 600—800 r.p.m. to complete the process. After the resin has set the mould is stopped and the finished pole is removed from the mandrel.

To assist further in minimising any risk of the hose or nozzle snagging on the reinforcing material it may include a surface layer of loosely bound fibres which is placed as a first inner layer on the mandrel which is employed for introducing the fibre material into the mould cavity. If any fibres are 'picked up' by the nozzle they are then merely pulled free and the reinforcing cartridge is not ruined. The exact construction and shape of the sledge 9 for supporting the nozzle is not important, the main criterion being that it is adapted for free sliding motion over the surface of the glass fibre material in both the longitudinal and lateral directions.

In the modified arrangement of Figure 4 the hose 7 is provided with two supporting sleeves or sledges 9 which are spaced apart along the hose. Further sledges could be included if desired. The nozzle 8 is carried on an extension of the hose having a reduced diameter and projecting forwardly from the end most sleeve 9. This arrangement ensures that the nozzle is supported well clear of the surface of the reinforcement material 3 and eliminates any risk of sticky resin running back over the nozzle surface to the adjacent sledge 9.

The speed at which the hose is withdrawn through the mould may be controlled in any convenient manner, for example by winding the hose onto a reel whose rotation is controlled by a microprocessor in dependence upon the flow of resin through the hose. Other methods are of course possible and will occur to readers skilled in the art.

**Claims**

1. A method of manufacturing elongate tubular members of fibre reinforced plastics material comprising the steps of lining the interior surface of a generally horizontal elongate hollow mould (1) with reinforcing fibre material, introducing into the mould a hose (7) having a nozzle (8) at the free end thereof, rotating the mould, and supplying liquid resin to the hose and spraying the resin through the nozzle onto the inside of the rotating mould while withdrawing the hose and nozzle along the mould, characterised in that the nozzle and a length of hose attached thereto are substantially without external support within the mould and rest against the lined wall of the mould, the nozzle and said length of hose sliding freely over the dry reinforcement material as the mould rotates and the nozzle is withdrawn along the mould.

2. A method according to claim 1, wherein the hose rests against the lined wall of the mould substantially over the length thereof received in the mould.

3. A method according to claim 1 or 2, wherein the nozzle and hose are drawn into the mould by means of a cord or the like introduced into the mould with the lining of reinforcing fibre material.

4. A method according to claim 1, 2 or 3, wherein the mould is rotated at a relatively low speed during supply of the resin into the mould and the speed of rotation is substantially increased after the hose and nozzle have been withdrawn from the mould.

5. A method according to claim 4, wherein the relatively low speed of rotation produces a centrifugal acceleration of 2—5 G and said increased speed of rotation produces a centrifugal acceleration of greater than 40 G.

6. A method according to any one of claims 1 to 5, wherein the hose and nozzle are withdrawn from the mould by pulling on the hose outside of the mould.

7. A method according to one of claims 1 to 6, wherein the nozzle is supported relative to the material lining the mould by at least one member having a low co-efficient of friction with said material.

8. A method according to claim 7, wherein the or each supporting member comprises a sleeve (9) of polytetrafluoroethylene.

9. A method according to claim 8, wherein the hose has an extension of reduced diameter projecting forwardly from the endmost support member and carrying the nozzle.

10. An apparatus for manufacturing elongate tubular members by the method of claim 1, comprising a generally horizontal elongate hollow mould (1), means for rotating the mould about the axis thereof, means for lining the inside surface of the mould with reinforcing fibre material, a nozzle (8) for spraying liquid resin onto the inside of the lined mould, a hose (7) for supplying the liquid resin to the nozzle, and means for withdrawing the hose and nozzle through the mould, characterised in that the nozzle and a length of hose attached thereto are substantially without external support means within the mould and are adapted to rest against the lined wall of the mould to slide freely relative thereto as the nozzle is withdrawn along the mould.

11. An apparatus according to claim 10, wherein the nozzle is supported relative to the material lining the mould by at least one member having a low coefficient of friction with said material.

12. An apparatus according to claim 11, wherein the or each supporting member comprises a sleeve (9) of polytetrafluoroethylene.

13. An apparatus according to claim 11 or 12, wherein the hose has an extension of reduced diameter projecting forwardly from the endmost support member and carrying the nozzle.

**Patentansprüche**

1. Verfahren zum Herstellen langgestreckter, rohrförmiger Teile aus faserverstärken Kunststoff, mit den Verfahrenschritten des Auskleidens der Innenfläche einer im wesentlichen horizontalen, langgestreckten hohlen Form (1) mit verstärkendem Fasermaterial, des Einführens eines an seinem freien Ende eine Düse (8) aufweisenden Schlauchs (7) in die Form, des Drehens der Form, und des Einführens von flüssigem Harz in den Schlauch und des Sprühens des Harzes durch die Düse auf die Innenseite der sich drehenden Form, während der Schlauch und die Düse entlang der Form zurückgezogen werden, dadurch gekennzeichnet, daß sich die Düse und ein Längsstück des daran angebrachten Schlauches im wesentlichen ohne äußere Abstützung in der Form befinden und an der ausgekleideten Wandung der Form anliegen, wobei die Düse und das Schlauchstück frei beweglich über das trockene Verstärkungsmaterial gleiten, wenn die Form gedreht und die Düse entlang der Form zurückgezogen wird.

2. Verfahren nach Anspruch 1, dadurch gekennzeichnet, daß der Schlauch im wesentlichen über seine in der Form befindlich Länge an der ausgekleideten Wandung der Form anliegt.

3. Verfahren nach Anspruch 1 oder 2, dadurch gekennzeichnet, daß die Düse und der Schlauch mittels einer Seileinrichtung od.dgl., die beim Auskleiden mit dem verstärkenden Fasermaterial in die Form eingeführt wird, in die Form gezogen wird.

4. Verfahren nach Anspruch 1, 2 oder 3, dadurch gekennzeichnet, daß die Form bei einer relativ niedrigen Geschwindigkeit gedreht wird, während der Harz in die Form eingebracht wird, un daß die Drehzahl wesentlich erhöht wird, nachdem der Schlauch und die Düse aus der Form zurückgezogen sind.

5. Verfahren nach Anspruch 4, dadurch gekennzeichnet, daß die relativ niedrige Drehzahl eine Zentrifugalbeschleunigung von 2—5 G erzeugt und daß die erhöhte Drehzahl eine Zentrifugalbeschleunigung von mehr als 40 G erzeugt.

6. Verfahren nach einem der Ansprüche 1 bis 5, dadurch gekennzeichnet, daß der Schlauch und die Düse dadurch aus der Form zurückgezogen werden, daß an dem Schlauch außerhalb der Form gezogen wird.

7. Verfahren nach einem der Ansprüche 1 bis 6, dadurch gekennzeichnet, daß die Düse, bezogen auf das die Form auskleidende Material durch mindestens ein Teil abgestützt wird, welches mit dem Auskleidungsmaterial einen geringen Reibungskoeffizienten besitzt.

8. Verfahren nach Anspruch 7, dadurch gekennzeichnet, daß das oder jedes Stützteil eine Hülse (9) aus Polytetrafluoräthylen umfaßt.

9. Verfahren nach Anspruch 8, dadurch gekennzeichnet, daß der Schlauch eine Verlängerung reduzierten Durchmessers umfaßt, die von dem vordersten Stützteil nach vorne ragt und die Düse trägt.

10. Vorrichtung für die Herstellung langgestreckter rohrförmiger Teile nach dem Verfahren gemäß Anspruch 1, mit einer im wesentlichen horizontalen, langgestreckten hohlen Form (1), einer Einrichtung zum Drehen der Form um deren Achse, einer Einrichtung zum Auskleiden der Innenfläche der Form mit verstärkendem Fasermaterial, einer Düse (8) zum Sprühen von flüssigem Harz auf die Innenseite der ausgekleideten Form, einem Schlauch (7) zum Fördern des flüssigen Harzes zu der Düse und eine Einrichtung zum Zurückziehen der Schlauches und der Düse durch die Form, dadurch gekennzeichnet, daß sich die Düse und ein Längsstück des daran befestigten Schlauches im wesentlichen ohne äußere Abstützeinrichtung in der Form befinden und so ausgebildet sind, daß sie an der ausgekleideten Wandung der Form anliegen und relativ zu dieser frei beweglich sind, während die Düse entlang der Form zurückgezogen wird.

11. Vorrichtung nach Anspruch 10, dadurch gekennzeichnet, daß die Düse, bezogen auf das die Form auskleidende Material, von zumindest einem Teil getragen ist, welches mit dem Material einen geringen Reibungskoeffizient besitzt.

12. Vorrichtung nach Anspruch 11, dadurch gekennzeichnet, daß das oder jedes Stützteil eine Hülse (9) aus Polytetrafluoräthylen umfaßt.

13. Vorrichtung nach Anspruch 11 oder 12, dadurch gekennzeichnet, daß der Schlauch eine Verlängerung verringerten Durchmesser aufweist, die sich von dem vordersten Stützteil aus nach vorne erstreckt und die Düse trägt.

**Revendications**

1. Procédé de fabrication d'éléments tubulaires de forme allongée en matière plastique renforcée de fibres comprenant les phases qui consistent à revêtir la surface interne d'un moule creux (1) de forme allongée, sensiblement horizontal, d'une matière fibreuse renforçante, à introduire dans le moule un tuyau (7) présentant une buse (8) à son extrémité libre, à faire tourner le moule et à acheminer une résine liquide au tuyau et à pulvériser la résine à travers la buse sur la surface interne du moule rotatif, pendant qu'on retire le tuyau et la buse le long du moule, caractérisé en ce que la buse et la longueur de tuyau fixée à cette buse sont sensiblement dépourvues de support extérieur à l'intérieur du moule et prennent appui sur la paroi revêtue du moule, la buse et ladite longueur de tuyau glissant librement sur la matière de renforcement sèche pendant que le moule tourne et que la buse est tirée le long de ce moule.

2. Procédé selon la revendication 1, dans lequel le tuyau repose contre la paroi revêtue du moule sensiblement sur toute la longueur de ce tuyau qui est contenue dans le moule.

3. Procédé selon la revendication 1 ou la revendication 2, dans lequel la buse et le tuyau sont attirés dans le moule au moyen d'un cordon ou équivalent introduit dans le moule avec le revêtement de matière fibreuse renforçante.

4. Procédé selon la revendication 1, 2 ou 3, dans lequel on fait tourner le moule à une vitesse relativement lente pendant l'introduction de résine dans le moule et où l'on augmente sensiblement la vitesse de rotation après que le tuyau et la buse ont été retirés du moule.

5. Procédé selon la revendication 4, dans lequel la vitesse de rotation relativement lente produit une accélération centrifuge de 2 à 5 g tandis que ladite vitesse de rotation augmentée engendre un accélération centrifuge supérieure à 40 g.

6. Procédé selon l'une quelconque des revendications 1 à 5, dans lequel on tire le tuyau et la buse du moule en tirant sur le tuyau à l'extérieur du moule.

7. Procédé selon l'une quelconque des revendications 1 à 6, dans lequel la buse prend appui par rapport à la matière qui revêt le moule au moyen d'au moins un élément possédant un faible coefficient de frottement sur ladite matière.

8. Procédé selon la revendication 7, dans lequel le ou chaque élément porteur comprend un manchon (9) en polytétrafluoroéthylène.

9. Procédé selon la revendication 8, dans lequel le tuyau possède un prolongement de diamètre réduit qui fait saillie en avant de l'élément support le plus proche de l'extrémité et qui porte la buse.

10. Installation pour fabriquer des éléments tubulaires de forme allongée par le procédé de la revendication 1, comprenant un moule creux (1) de forme allongée, sensiblement horizontal, des moyens pour faire tourner le moule autour de son axe, des moyens pour revêtir la surface interne du moule d'une matière renforçante, une buse (8) pour pulvériser de la résine liquide sur la surface interne du moule revêtue, un tuyau (7) pour acheminer de la résine liquide à la buse, et des moyens pour tirer le tuyau et la buse à travers le moule, caractérisée en ce que la buse et la longueur de tuyau fixée à cette buse sont sensiblement dépourvues de moyens supports extérieurs à l'intérieur du moule et sont adaptées pour reposer contre la paroi revêtue du moule de façon à glisser librement par rapport à cette paroi pendant que la buse est tirée le long du moule.

11. Installation selon la revendication 10, dans laquelle la buse prend appui sur la matière qui double le moule au moyen d'au moins un élément possédant un faible coefficient de frottement sur ladite matière.

12. Installation selon la revendication 11, dans laquelle l'élément porteur ou chaque élément porteur comprend un manchon (9) en polytétrafluoroéthylène.

13. Installation selon la revendication 11 ou 12, dans laquelle le tuyau possède un prolongement de diamètre réduit qui fait saillie en avant de l'élément support le plus proche de l'extrémité et qui porte la buse.

FIG. I.

FIG. 4.

0 101 269

FIG. 2.

FIG. 3.